# DEMANDE DE BREVET EUROPEEN

(11) **EP 1 959 631 A1**
(43) Date de publication de la demande: **20.08.2008**
(21) Numéro de dépôt: 08100723.9
(22) Date de dépôt: 22.01.2008
(51) Int. Cl.: H04L 29/06, H04L 29/12

(54) **Réseau IMS autorisant la portabilité d' identifiants publics d' utilisateurs**

(30) Priorité: 09.02.2007 FR 0753162
(71) Demandeur: Alcatel Lucent, 75008 Paris (FR)
(72) Inventeur: Saker, Daniel, 91620, LA VILLE DU BOIS (FR); Queau, Guylaine, 91370, VERRIERES-LE-BUISSON (FR); Marchais, Jacques, 78160, MARLY LE ROI (FR)
(74) Mandataire: El Manouni, Josiane

(57) **Abrégé**

Un réseau de communication de type IMS (RD1) est associé à un nom de domaine et comprend un module de type HSS, un module de type DNS, un module de type P-CSCF couplé au module de type DNS, et des modules de type S-CSCF et de type I-CSCF couplés aux modules de type DNS et de type HSS. Ce réseau (RD1) stocke, pour des utilisateurs qui ont déjà souscrit chacun un abonnement auprès de son opérateur, un identifiant public d'utilisateur (désignant un nom de domaine de réseau IMS donneur) en correspondance d'un identifiant privé d'utilisateur (désignant le nom de domaine du réseau IMS receveur auprès duquel il est actuellement abonné). Certains au moins des modules de type CSCF sont chargés, lorsqu'ils reçoivent un message à transmettre comprenant un identifiant public et/ou un identifiant privé d'un utilisateur, d'accéder aux identifiants publics d'utilisateurs qui sont stockés en correspondance des identifiants privés d'utilisateurs afin de déterminer le nom de domaine du réseau IMS receveur auprès duquel cet utilisateur est actuellement abonné, puis d'accéder au module de type DNS afin de déterminer l'adresse IP du module de type I-CSCF du réseau IMS receveur dont le nom de domaine a été déterminé de manière à lui transmettre le message en vue de son traitement.

## Description

L'invention concerne les (coeurs de) réseaux de communication (ou domaines) dits IMS (pour « IP Multimedia Subsystem ») et plus précisément la portabilité des identifiants publics des utilisateurs au sein de tels réseaux.

Les (coeurs de) réseaux de communication (ou domaines) IMS ont été initialement développés par les opérateurs de certains réseaux de communication offrant une connectivité IP, comme par exemple les réseaux d'accès IP GPRS ou UMTS, afin d'offrir des services spécifiques aux clients abonnés (ou souscripteurs). A titre d'exemple, un domaine IMS peut permettre à un utilisateur d'afficher sur l'écran de son terminal de communication (mobile ou fixe ou encore sans fil) une page Internet personnelle d'un utilisateur appelant, ou de disposer de services de communication vocale améliorée ou de services multimédia IP ou encore de services de messagerie instantanée, ou de faire sonner plusieurs de ses terminaux lorsqu'il est appelé. La mise en oeuvre de ces services IMS se fait généralement au moyen du protocole de signalisation SIP (pour « Session Initiation Protocol »).

Il est rappelé que la connexion d'un terminal de communication à un domaine IMS se fait par l'intermédiaire d'un réseau d'accès d'un réseau mobile de type dit paquet ou « PS » (pour « Packet Switched »), par exemple un réseau GPRS, ou d'un réseau d'accès d'un réseau de communication fixe, comme par exemple un réseau ADSL, ou encore d'un réseau d'accès d'un réseau de communication sans fil ou WLAN (pour « Wireless Local Area Network ») ou WiMAX.

Chaque réseau (ou domaine) IMS est associé à un nom de domaine (ou « domain name ») et chaque utilisateur abonné à des services d'un réseau (ou domaine) IMS dispose d'un identifiant public d'utilisateur (ou PUI pour (« Public User Identity »)) représentatif, d'une part, du nom de domaine du réseau (ou domaine) IMS auquel il est abonné, et d'autre part, de sa propre identité. Cet identifiant est par exemple un SIP URI (sip:name@domain - défini par RFC 3261 et RFC 2396) si le terminal dispose d'un agent SIP ou un Tel URI (sip: « E164 number » : + CC NDC SN @domain - défini par RFC 3966) si le terminal dispose d'un numéro de téléphone. On notera qu'un utilisateur abonné à un réseau IMS peut disposer à la fois d'un SIP URI et d'un Tel URI.

L'identifiant public d'utilisateur d'un client (ou abonné) d'un réseau (ou domaine) IMS étant celui qui est utilisé par ses contacts et correspondants pour le joindre, il est particulièrement utile qu'il puisse le conserver (ou le « porter ») lorsqu'il décide de changer d'opérateur. Cela est d'autant plus utile que le nombre d'opérateurs de réseau IMS ne cesse de croître du fait que leurs réseaux IMS assurent la convergence entre les réseaux sans fil et les réseaux filaires (ou fixes).

Or, s'il est possible qu'un client d'un opérateur de téléphonie mobile ou fixe conserve (ou porte) son numéro de téléphone lorsqu'il devient le client d'un autre opérateur, cette portabilité n'est actuellement pas possible pour les identifiants publics d'utilisateurs abonnés à un réseau IMS.

L'invention a donc pour but de remédier à cet inconvénient, et notamment d'enrichir les réseaux IMS au moyen d'informations de portabilité sur les identifiants publics d'utilisateurs (SIP URI et/ou Tel URI), afin de permettre aux utilisateurs (abonnés IMS) de changer d'opérateur IMS en gardant l'identifiant public qui leur a été attribué initialement (par un réseau IMS dit « donneur »).

Elle propose à cet effet un réseau (ou domaine) IMS, associé à un nom de domaine et comprenant un module de stockage d'informations d'utilisateurs de type HSS (pour « Home Subscriber Server »), un module de conversion de noms de domaine en adresses IP de type DNS (pour « Domain Name System »), un module de type P-CSCF (pour « Proxy-Call Session Control Function ») couplé au module de type DNS, et des modules de type S-CSCF (pour « Serving-Call Session Control Function ») et de type I-CSCF (pour « Interrogating-Call Session Control Function ») couplés aux modules de type DNS et de type HSS.

Ce réseau IMS se caractérise par le fait :
- qu'il stocke, pour des utilisateurs qui ont déjà souscrit chacun un abonnement auprès de son opérateur (mais qui n'y sont plus forcément abonnés), un identifiant public d'utilisateur, désignant un nom de domaine de réseau IMS donneur, en correspondance d'un identifiant privé d'utilisateur (désignant le nom de domaine du réseau IMS receveur auprès duquel cet utilisateur est actuellement abonné) et/ou le nom de domaine dudit réseau IMS receveur, et
- que certains au moins de (et de préférence tous) ses modules de type CSCF (au moins I-CSCF et S-CSCF) sont chargés, lorsqu'ils reçoivent un message (d'enregistrement et/ou d'établissement de session) comprenant l'identifiant public et/ou l'identifiant privé d'un utilisateur, d'accéder aux identifiants publics d'utilisateurs qui sont stockés en correspondance des identifiants privés d'utilisateurs et/ou des noms de domaine des réseaux IMS receveurs des utilisateurs afin de déterminer le nom de domaine du réseau IMS receveur auprès duquel cet utilisateur est actuellement abonné, puis d'accéder au module de type DNS afin de déterminer l'adresse IP du module de type I-CSCF du réseau IMS receveur dont le nom de domaine a été déterminé pour lui transmettre le message en vue de son traitement.

Le réseau IMS selon l'invention peut comporter d'autres caractéristiques qui peuvent être prises séparément ou en combinaison, et notamment :
- certains au moins des identifiants publics d'utilisateurs peuvent être stockés dans le module de type HSS en correspondance des identifiants privés d'utilisateurs et/ou des noms de domaine des réseaux IMS receveurs auxquels les utilisateurs sont actuellement abonnés, ainsi qu'éventuellement d'états de portabilité (« porté hors » lorsqu'un utilisateur n'est plus abonné au réseau IMS considéré ou « porté dans » lorsqu'un utilisateur a rejoint le réseau IMS considéré en conservant son identifiant public et qu'il est toujours abonné au réseau IMS considéré) ;
- il peut comprendre un module de portabilité chargé de stocker certains au moins des identifiants publics d'utilisateurs en correspondance des identifiants privés d'utilisateurs et/ou des noms de domaine des réseaux IMS receveurs auxquels les utilisateurs sont actuellement abonnés, ainsi qu'éventuellement d'états de portabilité (porté hors, porté dans);
- son module de type I-CSCF peut être chargé, lorsqu'il reçoit un message d'enregistrement à transmettre comprenant un identifiant public d'un utilisateur appelant souhaitant s'enregistrer auprès du réseau IMS receveur auquel il est abonné, d'accéder aux identifiants publics d'utilisateurs qui sont stockés en correspondance des identifiants privés d'utilisateurs et/ou des noms de domaine des réseaux IMS receveurs afin de déterminer le nom de domaine du réseau IMS receveur de l'appelant ou bien l'identifiant privé qui correspond à l'identifiant public contenu dans le message et dans le second cas déduire de cet identifiant privé le nom de domaine du réseau IMS receveur auprès duquel cet utilisateur appelant est actuellement abonné, puis d'accéder au module de type DNS afin de déterminer l'adresse IP du module de type I-CSCF du réseau IMS dont le nom de domaine a été déterminé de manière à lui transmettre le message en vue de son traitement;
- son module de type S-CSCF peut être chargé, lorsqu'il reçoit un message d'établissement de session ou d'appel d'un utilisateur appelant (abonné auprès de lui), devant être transmis à un utilisateur appelé (éventuellement abonné à un autre réseau IMS) et comprenant des identifiants publics d'utilisateurs appelant et appelé, d'accéder au module de type HSS (étendu) ou au module de portabilité dans le réseau IMS receveur de l'appelant afin de déterminer le nom de domaine du réseau IMS receveur de l'appelé ou bien l'identifiant privé qui correspond à l'identifiant public contenu dans le message et dans le second cas déduire de cet identifiant privé le nom de domaine du réseau IMS receveur auprès duquel cet utilisateur appelé est actuellement abonné, puis d'accéder au module de type DNS afin de déterminer l'adresse IP du module de type I-CSCF du réseau IMS dont le nom de domaine a été déterminé pour lui transmettre ce message en vue de son traitement ;
- en variante, son module de type I-CSCF peut être chargé, lorsqu'il reçoit un message initié dans un réseau IMS visité d'un utilisateur appelant (abonné auprès de lui), devant être transmis à un utilisateur appelé (abonné à un autre réseau IMS) et comprenant des identifiants publics d'utilisateurs appelant et appelé, d'accéder à son module de type HSS afin de déterminer le module de type S-CSCF qui correspond à l'identifiant public de l'utilisateur appelant (contenu dans le message) de manière à lui transmettre ce message. Dans ce cas son module de type S-CSCF est chargé, lorsqu'il reçoit un message en provenance du module de type I-CSCF de son réseau IMS, d'accéder au module de type HSS de son réseau IMS ou au module de portabilité afin de déterminer le nom de domaine du réseau IMS receveur de l'appelé ou bien l'identifiant privé qui correspond à l'identifiant public contenu dans le message et dans le second cas déduire de cet identifiant privé le nom de domaine du réseau IMS receveur auprès duquel cet utilisateur appelé est actuellement abonné, puis d'accéder à son module de type DNS afin de déterminer l'adresse IP du module de type I-CSCF du réseau IMS dont le nom de domaine a été déterminé de manière à lui transmettre ce message en vue de son traitement ;
- son module de type S-CSCF peut être chargé, lorsqu'il reçoit un message d'un utilisateur appelant (abonné auprès de lui), devant être transmis à un utilisateur appelé (abonné à un autre réseau IMS) et comprenant des identifiants publics d'utilisateurs appelant et appelé, d'accéder à son module de type HSS afin de déterminer si un identifiant privé de l'utilisateur appelé est stocké en correspondance de l'identifiant public de cet utilisateur appelé (contenu dans le message), et dans la négative d'accéder à son module de portabilité afin de déterminer le nom de domaine du réseau IMS receveur de l'appelé ou bien l'identifiant privé qui correspond à l'identifiant public contenu dans le message et dans le second cas déduire de cet identifiant privé le nom de domaine du réseau IMS receveur auprès duquel cet utilisateur appelé est actuellement abonné, puis d'accéder à son module de type DNS afin de déterminer l'adresse IP du module de type I-CSCF du réseau IMS dont le nom de domaine a été déterminé de manière à lui transmettre ce message en vue de son traitement ;
- en variante, son module de type I-CSCF peut être chargé, lorsqu'il reçoit un message d'un utilisateur appelant (abonné auprès de lui), devant être transmis à un utilisateur appelé (abonné à un autre réseau IMS) et comprenant des identifiants publics d'utilisateurs appelant et appelé, d'accéder à son module de type HSS afin de déterminer le module de type S-CSCF qui correspond à l'identifiant public de l'utilisateur appelant (contenu dans le message) de manière à lui transmettre ce message. Dans ce cas, son module de type S-CSCF peut être chargé, lorsqu'il reçoit ce message en provenance du module de type I-CSCF, d'accéder à son module de type HSS afin de déterminer si un identifiant privé de l'utilisateur appelé est stocké en correspondance de l'identifiant public de cet utilisateur appelé (contenu dans le message), et dans la négative d'accéder à son module de portabilité afin de déterminer le nom de domaine du réseau IMS receveur de l'appelé ou bien l'identifiant privé qui correspond à l'identifiant public contenu dans le message et dans le second cas déduire de cet identifiant privé le nom de domaine du réseau IMS receveur auprès duquel cet utilisateur appelé est actuellement abonné, puis d'accéder au module de type DNS afin de déterminer l'adresse IP du module de type I-CSCF du réseau IMS dont le nom de domaine a été déterminé de manière à lui transmettre ce message en vue de son traitement ;
- son module de type S-CSCF peut être chargé, lorsqu'il reçoit un message destiné à un utilisateur appelé (abonné à un autre réseau IMS que le sien) et comprenant un identifiant public d'utilisateur appelé, d'accéder à son module de type HSS afin de déterminer le nom de domaine du réseau IMS receveur de l'appelé ou bien l'identifiant privé qui correspond à l'identifiant public contenu dans le message et dans le second cas déduire de cet identifiant privé le nom de domaine du réseau IMS receveur auprès duquel cet utilisateur appelé est actuellement abonné, puis d'accéder à son module de type DNS afin de déterminer l'adresse IP du module de type I-CSCF du réseau IMS dont le nom de domaine a été déterminé de manière à lui transmettre ce message en vue de son traitement ;
- en variante, son module de type S-CSCF peut être chargé, lorsqu'il reçoit un message, destiné à un utilisateur appelé (abonné à un autre réseau IMS que le sien) et comprenant un identifiant public d'utilisateur appelé, d'accéder à son module de type HSS afin de déterminer si un identifiant privé de l'utilisateur appelé est stocké en correspondance de l'identifiant public de cet utilisateur appelé (contenu dans le message), et dans la négative d'accéder à son module de portabilité afin de déterminer le nom de domaine du réseau IMS receveur de l'appelé ou bien l'identifiant privé qui correspond à l'identifiant public contenu dans le message et dans le second cas déduire de cet identifiant privé le nom de domaine du réseau IMS receveur auprès duquel cet utilisateur appelé est actuellement abonné, puis d'accéder à son module de type DNS afin de déterminer l'adresse IP du module de type I-CSCF du réseau IMS dont le nom de domaine a été déterminé de manière à lui transmettre ce message en vue de son traitement ;
- son module de type P-CSCF et/ou son module de type I-CSCF et/ou son module de type S-CSCF peu(ven)t être chargé(s) d'adjoindre à un message reçu à transmettre une information signalant qu'il vient de déterminer un nom de domaine d'un utilisateur appelant ou appelé à partir de son identifiant privé d'utilisateur qui est stocké en correspondance de son identifiant public d'utilisateur.

D'autres caractéristiques et avantages de l'invention apparaîtront à l'examen de la description détaillée ci-après, et des dessins annexés, sur lesquels :
- la figure 1 illustre de façon très schématique une partie d'une installation de communication comprenant trois réseaux (ou domaines) IMS selon l'invention, dans un premier exemple de phase d'enregistrement,
- la figure 2 illustre de façon très schématique une partie d'une installation de communication comprenant trois réseaux (ou domaines) IMS selon l'invention, dans un second exemple de phase d'enregistrement,
- la figure 3 illustre de façon très schématique une partie d'une installation de communication comprenant trois réseaux (ou domaines) IMS, dont deux au moins sont selon l'invention, dans un premier exemple de phase d'établissement d'une communication entre un appelant et un appelé,
- la figure 4 illustre de façon très schématique une partie d'une installation de communication comprenant quatre réseaux (ou domaines) IMS, dont trois au moins sont selon l'invention, dans un deuxième exemple de phase d'établissement d'une communication entre un appelant et un appelé,
- la figure 5 illustre de façon très schématique une partie d'une installation de communication comprenant trois réseaux (ou domaines) IMS, dont deux au moins sont selon l'invention, dans un troisième exemple de phase d'établissement d'une communication entre un appelant et un appelé,
- la figure 6 illustre de façon très schématique une partie d'une installation de communication comprenant quatre réseaux (ou domaines) IMS, dont trois au moins sont selon l'invention, dans un quatrième exemple de phase d'établissement d'une communication entre un appelant et un appelé,
- la figure 7 illustre de façon très schématique une partie d'une installation de communication comprenant quatre réseaux (ou domaines) IMS, dont deux au moins sont selon l'invention, dans un cinquième exemple de phase d'établissement d'une communication entre un appelant et un appelé.

Les dessins annexés pourront non seulement servir à compléter l'invention, mais aussi contribuer à sa définition, le cas échéant.

L'invention a pour objet de permettre la portabilité des identifiants publics d'utilisateurs en cas de changement d'opérateur.

Dans ce qui suit, on ne considérera que des réseaux (ou domaines) IMS indépendamment des réseaux d'accès via lesquels ils peuvent être connectés à des terminaux de communication. Tout type de réseau d'accès peut en effet assurer la liaison entre un réseau (ou domaine) IMS selon l'invention et un terminal de communication, et notamment un réseau (ou domaine) d'accès d'un réseau mobile de type dit paquet ou PS, par exemple un réseau GPRS, ou un domaine d'un réseau de communication fixe, comme par exemple un réseau xDSL, ou encore un domaine d'un réseau local sans fil (standards WLAN (« Wireless Local Area Network » - IEEE 802.11, Wi-Fi, ETSI HiperLAN/2), Bluetooth (IEEE 802.15), WiMAX (IEEE 802.16, ETSI HiperMAN) et Zigbee).

Par ailleurs, on considère dans ce qui suit, à titre d'exemple non limitatif, que les terminaux de communication des utilisateurs appelants et appelés sont des téléphones mobiles (ou cellulaires). Mais, l'invention n'est pas limitée à ce type de terminal de communication. Elle concerne en effet tout équipement de communication capable de se connecter à un réseau (ou domaine) IMS et d'échanger des données avec un autre équipement de communication. Il pourra donc également s'agir, par exemple, d'un téléphone fixe ou d'un assistant personnel numérique (ou PDA) communiquant ou d'un ordinateur fixe ou portable équipé d'un dispositif de communication.

En outre, on considère dans ce qui suit, à titre d'exemple non limitatif, que chaque terminal de communication d'un utilisateur appelant ou appelé est équipé d'un agent SIP et est donc joignable au moyen d'un identifiant public d'utilisateur (ou PUI pour « Public User Identity ») de type SIP URI qui représente notamment le nom de domaine d'un réseau (ou domaine) IMS auquel il est ou a été abonné. Il est rappelé qu'un SIP URI est défini par les RFC 3261 et RFC 2396 et se présente généralement sous la forme « sip:name@domain ». Mais, l'invention concerne également les terminaux de communication joignables au moyen d'un identifiant public d'utilisateur (ou PUI) de type Tel URI qui représente notamment le nom de domaine d'un réseau (ou domaine) IMS auquel leur utilisateur est ou a été abonné et leur numéro de téléphone. Il est rappelé qu'un Tel URI est défini par la RFC 3966 et se présente généralement sous la forme « sip: « E164 number » : + CC NDC SN @domain ».

Les constituants d'un réseau IMS étant bien connus de l'homme de l'art, ils ne seront pas décrits ici en détails, comme c'est notamment le cas dans la spécification RFC 23.002 de l'organisme 3GPP, accessible sur le site Internet du 3GPP. Les mêmes mécanismes s'appliquent également à des réseaux à base de technologie d'accès CDMA 2000 et de technologie Core MMD (équivalente à IMS du fait qu'elle est comme IMS considérée comme agnostique par rapport aux réseaux d'accès) telles que définies par le 3GPP2.

Il est simplement rappelé ci-après quelques fonctionnalités de modules du réseau (ou domaine) IMS, nécessaires à la compréhension de l'invention.

Un réseau IMS est associé à un nom de domaine et permet à des clients abonnés de disposer de services IMS spécifiques lorsqu'ils sont raccordés à un domaine paquet de leur réseau d'appartenance ou d'un réseau visité dans le cas du « roaming ».

Un réseau IMS comporte notamment un module de stockage d'informations d'utilisateurs de type HSS (pour Home Subscriber Server), un module de conversion de noms de domaine en adresses IP de type DNS (pour Domain Name System), un module de type P-CSCF (pour Proxy-Call Session Control Function) couplé au module de type DNS, et des modules de type S-CSCF (pour Serving-Call Session Control Function) et de type I-CSCF (pour Interrogating-Call Session Control Function) couplés aux modules de type DNS et de type HSS.

Le module de type P-CSCF est un module de contrôle de session IMS. Il est le premier point de contact avec le réseau IMS pour un terminal UE d'un utilisateur abonné. Ce module P-CSCF comprend une fonction CSCF assurant le routage de messages selon le protocole SIP (« Session Initiation Protocol »). Il assure généralement, et notamment, une fonction de sécurité, une fonction de contrôle du plan d'utilisateur (ou « user plane »), une fonction de compression SIP, une fonction de génération d'identifiants de taxation, une fonction d'assertion d'identité de l'abonné, une fonction de correspondance entre l'adresse publique et l'adresse IP de l'abonné, et une fonction de gestion de routage vers et depuis un autre module de contrôle de session appelé S-CSCF.

Le module de type S-CSCF constitue la porte d'entrée vers les services IMS offerts par le réseau IMS. A cet effet, il est connecté à un ou plusieurs serveurs d'applications non représentés. Il est notamment chargé de l'authentification des abonnés et du stockage de l'adresse du module P-CSCF auquel est raccordé le terminal d'un abonné IMS.

Ce module S-CSCF est couplé au module de stockage d'informations d'utilisateurs (également appelé base de données de souscription) ou HSS afin de récupérer des informations sur les abonnés et d'y stocker les adresses connues de ces derniers.

Le module de contrôle de session ou module I-CSCF est chargé d'initier l'enregistrement d'un terminal de communication UE auprès du module S-CSCF qui appartient au réseau IMS (dit « receveur ») auprès duquel il a souscrit son abonnement aux services IMS. Il est également chargé de rechercher où se trouvent les abonnés aux services IMS de son réseau IMS. A cet effet, il est non seulement connecté au module HSS de son réseau IMS, mais également aux coeurs des autres réseaux (ou domaines) IMS, et plus précisément à leurs modules S-CSCF.

Selon l'invention, le réseau IMS stocke, en plus des informations de souscription et de position des utilisateurs qui sont abonnés auprès de son opérateur, un identifiant privé d'utilisateur et/ou un nom de domaine de réseau IMS receveur en correspondance d'un identifiant public d'utilisateur (ou PUI) pour les utilisateurs qui ont déjà souscrit un abonnement auprès de son opérateur (et donc qui sont encore clients dudit opérateur ou qui ne le sont plus).

Un identifiant public d'utilisateur peut être également stocké en correspondance d'un état de portabilité indiquant si cet utilisateur n'est plus abonné au réseau IMS considéré (il est alors dit « porté hors ») ou si cet utilisateur a rejoint le réseau IMS considéré en conservant son identifiant public et qu'il est toujours abonné au réseau IMS considéré (il est alors dit « porté dans »).

L'identifiant privé d'utilisateur est stocké dans la carte SIM ou dans le terminal de l'utilisateur et désigne le nom de domaine du réseau IMS (dit receveur) auprès duquel l'utilisateur est actuellement abonné. L'identifiant public d'utilisateur (ici de type SIP URI, à titre d'exemple) désigne notamment le nom de domaine du premier réseau IMS (alors dit réseau donneur) auprès duquel l'utilisateur a souscrit un abonnement. On notera que c'est seulement lorsque l'utilisateur souscrit pour la première fois un abonnement auprès de l'un des opérateurs de réseau IMS que son identifiant privé d'utilisateur et son identifiant public d'utilisateur désignent tous les deux le nom de domaine du réseau IMS d'abonnement.

Egalement selon l'invention, certains au moins (I-CSCF et S-CSCF) des modules de type CSCF, et de préférence tous (I-CSCF, S-CSCF et P-CSCF), sont chacun adaptés afin que chaque fois qu'ils reçoivent un message, qui doit être transmis et qui comprend un identifiant public et/ou un identifiant privé d'un utilisateur, ils accèdent aux identifiants publics d'utilisateurs qui sont stockés en correspondance des identifiants privés d'utilisateurs et/ou des noms de domaine des réseaux IMS receveurs de ces utilisateurs. S'ils ne disposent que de l'identifiant public d'un utilisateur, ils déduisent le nom de domaine du réseau IMS receveur auprès duquel cet utilisateur est actuellement abonné de l'identifiant privé qui est stocké en correspondance de cet identifiant public ou bien ils trouvent le nom de domaine du réseau IMS receveur (auprès duquel cet utilisateur est actuellement abonné) qui est stocké en correspondance de cet identifiant public. S'ils disposent à la fois de l'identifiant privé d'un utilisateur et de son identifiant public, ils déduisent de cet identifiant privé le nom de domaine du réseau IMS receveur auprès duquel cet utilisateur est actuellement abonné.

Une fois que le nom de domaine du réseau IMS receveur de l'utilisateur appelant a été déterminé, le module S-CSCF ou I-CSCF (voire même P-CSCF) peut alors accéder au module DNS de son propre réseau IMS afin de déterminer l'adresse IP du module I-CSCF de ce réseau IMS receveur afin de lui transmettre le message en vue de son traitement.

Une partie au moins des identifiants publics d'utilisateurs est de préférence stockée en correspondance des identifiants privés d'utilisateurs et/ou des noms de domaine des réseaux IMS receveurs de ces utilisateurs dans un module de portabilité BP de chaque réseau IMS, accessible aux modules I-CSCF et S-CSCF (voire même P-CSCF). Dans une variante ou bien en complément, une partie au moins des identifiants publics d'utilisateurs peut être stockée en correspondance des identifiants privés d'utilisateurs et/ou des noms de domaine des réseaux IMS receveurs de ces utilisateurs dans le module HSS ou dans une extension de celui-ci.

On notera que les identifiants publics sont stockés par le module HSS ainsi que par l'application ISIM du terminal utilisateur et sont fournis lors de requêtes d'enregistrement et d'initialisation de session. Ils sont attribués par l'opérateur du réseau.

On notera par ailleurs que les identifiants privés sont attribués par l'opérateur auprès duquel l'usager est actuellement abonné. Ils peuvent prendre la forme d'identifiants du réseau d'accès (NAI) comme défini par la RFC 2486. Mais, il est également possible d'avoir l'IMSI inclus dans l'identité privée. L'identité privée est stockée dans le module HSS ainsi que dans l'application ISIM du terminal utilisateur et est fournie par le terminal lors de l'enregistrement et l'authentification.

Les messages à transmettre peuvent être par exemple des messages d'enregistrement ou de demande d'établissement de communication (ou d'appel).

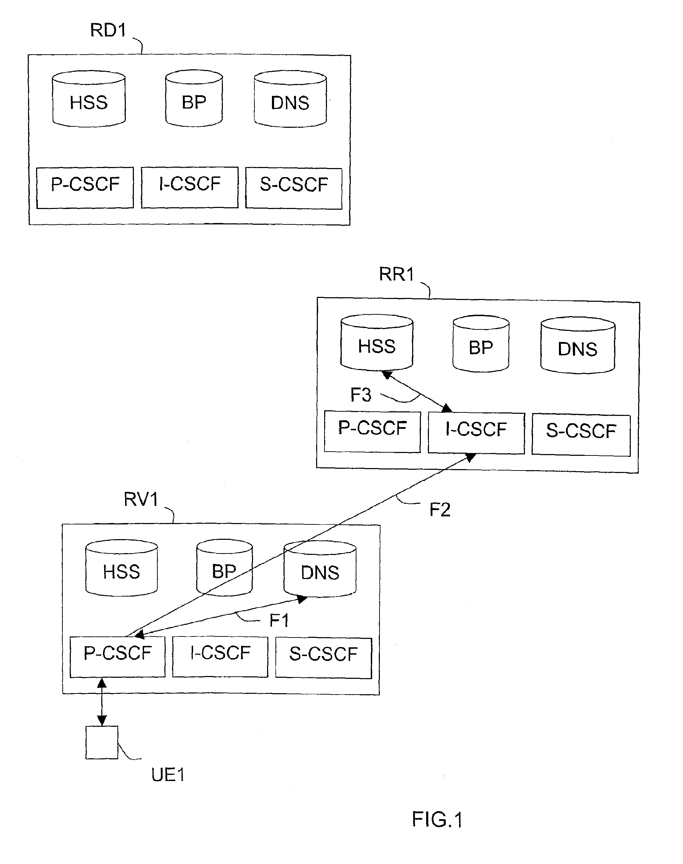

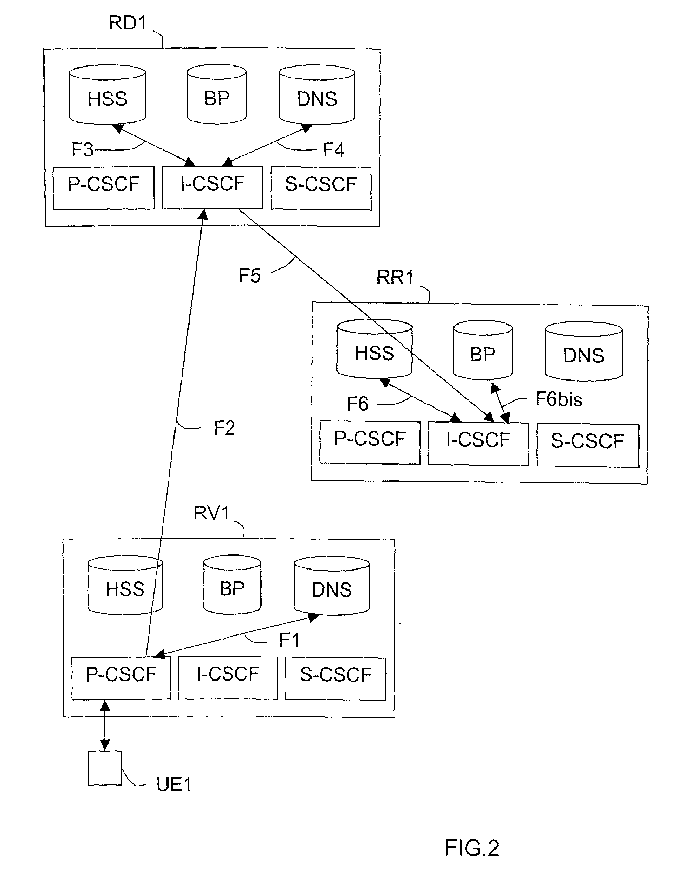

On décrit ci-après, en référence aux figures 1 et 2, deux exemples non limitatifs d'enregistrement d'un terminal de communication UE1 auprès du réseau (ou domaine) IMS receveur RR1 auquel il est actuellement abonné. Dans ces deux exemples, on considère que le terminal (de communication) UE1, d'une part, vient de se connecter à un réseau IMS visité RV1 et qu'il souhaite le signaler à son réseau IMS d'abonnement (ou receveur) RR1, et d'autre part, qu'avant d'être abonné auprès de ce réseau IMS receveur RR1 il était initialement abonné à un réseau IMS donneur RD1. On considère en outre, conformément à l'invention, qu'un utilisateur conserve l'identifiant public, qu'il a acquis lors de la première souscription d'un abonnement auprès d'un opérateur d'un réseau IMS donneur, chaque fois qu'il change d'opérateur.

Le premier exemple illustré sur la figure 1 représente une situation dans laquelle le terminal UE1 connaît à la fois l'identifiant public IPUL et l'identifiant privé IPR1 de son utilisateur. Lorsque ce terminal UE1 veut s'enregistrer auprès de son réseau IMS d'abonnement (ou destinataire) RR1, il transmet un message d'enregistrement, par exemple de type SIP REGISTER, au réseau IMS visité RV1, à destination de son réseau IMS receveur RR1. Ce message d'enregistrement comprend notamment (dans l'exemple) l'identifiant public IPU1 et l'identifiant privé IPR1 de l'utilisateur, ainsi que l'adresse IP du terminal UE1. Il est acheminé jusqu'au module P-CSCF du réseau IMS visité RV1, qui déduit alors de cet identifiant privé IPR1 le nom de domaine du réseau IMS receveur RR1 (qu'il désigne).

Puis, le module P-CSCF du réseau RV1 accède au module DNS de son réseau IMS visité RV1 (flèche F1) afin de déterminer l'adresse IP du module I-CSCF du réseau IMS receveur RR1 dont il vient de déterminer le nom de domaine. Il peut alors adjoindre au message d'enregistrement son adresse IP, puis le transmettre au (ou router vers le) module I-CSCF du réseau IMS d'abonnement RR1 (flèche F2).

A réception de ce message d'enregistrement, le module I-CSCF du réseau IMS receveur RR1 accède (flèche F3) au module HSS de ce dernier (par exemple au moyen d'une requête de type UAR DIAMETER (« User Authorization Request ») contenant l'identifiant public IPU1 et l'identifiant privé IPR1 afin qu'il vérifie le statut de l'utilisateur désigné, puis si son abonnement lui permet de se connecter au réseau IMS visité RV1 et toute autre opération habituelle connue de l'homme de l'art. Puis, le module HSS répond au module I-CSCF par un message contenant la liste des modules S-CSCF et leurs capacités afin qu'il sélectionne le module S-CSCF qui va devoir traiter la requête client.

Le second exemple illustré sur la figure 2 représente une situation dans laquelle le terminal UE1 ne connaît que l'identifiant public IPU1 de son utilisateur. Lorsque ce terminal UE1 veut s'enregistrer auprès de son réseau IMS receveur RR1, il transmet un message d'enregistrement, par exemple de type SIP REGISTER, au réseau IMS visité RV1, à destination de son réseau IMS receveur RR1. Ce message d'enregistrement comprend notamment (dans l'exemple) l'identifiant public IPU1 de l'utilisateur ainsi que l'adresse IP du terminal UE1. Il est acheminé jusqu'au module P-CSCF du réseau IMS visité RV1. Ce dernier ne disposant que de l'identifiant public IPU1, il ne peut que déduire de celui-ci le nom de domaine du réseau IMS auprès duquel l'utilisateur du terminal UE1 a initialement souscrit un abonnement. Il s'agit ici du réseau IMS donneur RD1.

Puis, le module P-CSCF du réseau RV1 accède au module DNS de son réseau IMS visité RV1 (flèche F1) afin de déterminer l'adresse IP du module I-CSCF du réseau IMS donneur RD1 dont il vient de déterminer le nom de domaine. Il peut alors adjoindre au message d'enregistrement son adresse IP, puis le transmettre au (ou router vers le) module I-CSCF du réseau IMS donneur RD1 (flèche F2).

A réception de ce message d'enregistrement, le module I-CSCF du réseau IMS donneur RD1 accède au module HSS étendu ou au module (ou base) de portabilité BP, où les identifiants publics d'utilisateurs sont stockés en correspondance des identifiants privés d'utilisateurs et/ou des noms de domaine des réseaux IMS receveurs de ces utilisateurs, au sein de son réseau IMS donneur RD1.

On considère ici, à titre d'exemple non limitatif, que ces identifiants publics et ces identifiants privés et/ou ces noms de domaine des réseaux IMS receveurs sont stockés dans le module HSS de son réseau IMS donneur RD1. On considère par ailleurs que les identifiants publics ne sont stockés qu'en correspondance des identifiants privés.

Le module I-CSCF détermine alors dans ce module HSS (flèche F3) l'identifiant privé IPR1 de l'utilisateur du terminal UE1 qui correspond à l'identifiant public IPU1 qui est contenu dans le message d'enregistrement reçu. Puis, il déduit de cet identifiant privé IPR1 le nom de domaine du réseau IMS (dit réseau IMS receveur) auprès duquel cet utilisateur appelant est actuellement abonné.

Le module I-CSCF accède ensuite au module DNS de son réseau IMS donneur RD1 (flèche F4) afin de déterminer l'adresse IP du module 1-CSCF du réseau IMS destinataire RR1 dont il vient de déterminer le nom de domaine. Il peut alors transmettre au (ou router vers le) module I-CSCF du réseau IMS receveur RR1 (flèche F5) le message d'enregistrement reçu.

A réception de ce message d'enregistrement, le module I-CSCF du réseau IMS receveur RR1 accède (flèche F6) au module HSS de ce dernier (par exemple au moyen d'une requête de type UAR DIAMETER contenant l'identifiant public IPU1 et l'identifiant privé IPR1 afin qu'il vérifie le statut de l'utilisateur désigné, puis si son abonnement lui permet de se connecter au réseau IMS visité RV1 et toute autre opération habituelle connue de l'homme de l'art. En variante, le module I-CSCF du réseau IMS receveur RR1 peut accéder (flèche F6bis) au module de portabilité BP. Puis, le module HSS répond au module I-CSCF par un message contenant la liste des modules S-CSCF et leurs capacités afin qu'il sélectionne le module S-CSCF qui va devoir traiter la requête client.

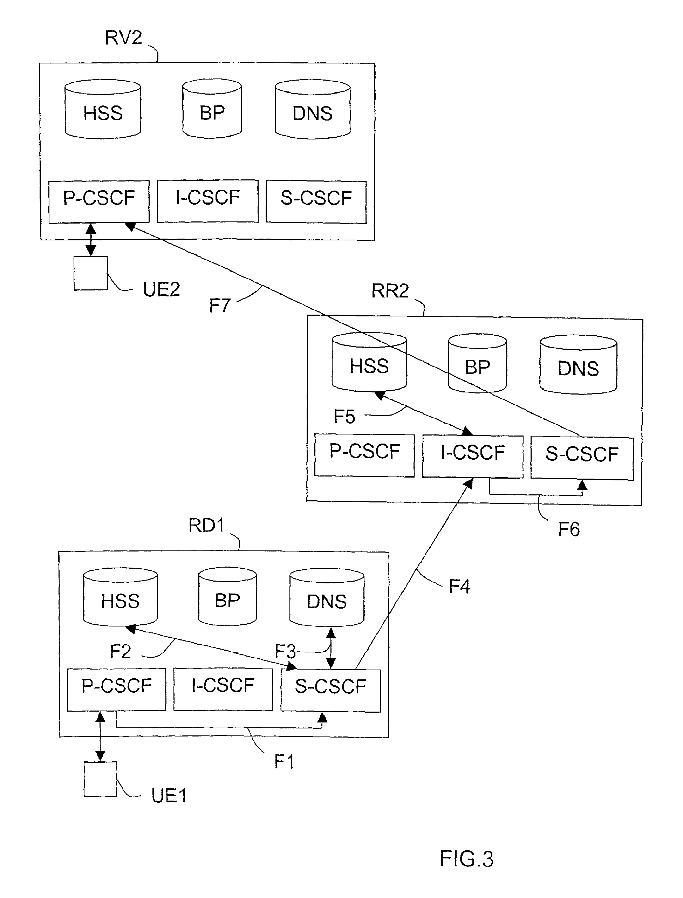

On décrit ci-après, en référence aux figures 3 à 7, cinq exemples non limitatifs d'initiation de phase d'établissement d'une communication entre un terminal (de communication) appelant UE1 et un terminal (de communication) appelé UE2. Dans ces cinq exemples, on considère que le terminal appelé UE2, d'une part, est connecté à un réseau IMS visité RV2, et d'autre part, que le réseau IMS auprès duquel il est actuellement abonné est un réseau IMS receveur RR2 (par conséquent son identifiant public lui a été attribué lorsqu'il s'est abonné pour la première fois à un réseau IMS donneur). On considère en effet, conformément à l'invention, qu'un utilisateur appelé ou appelant conserve l'identifiant public, qu'il a acquis lors de la première souscription d'un abonnement auprès d'un opérateur d'un réseau IMS donneur, chaque fois qu'il change d'opérateur.

Le premier exemple illustré sur la figure 3 représente une situation dans laquelle le terminal appelant UE1 connaît à la fois l'identifiant public IPU1 de son utilisateur et l'identifiant public IPU2 de l'utilisateur du terminal appelé UE2. On considère ici que le terminal appelant UE1 est connecté à son réseau IMS donneur RD1 et que l'utilisateur du terminal appelé UE2 était initialement abonné auprès de ce même réseau IMS donneur RD1, mais que ce n'est plus le cas. On considère également ici que le module HSS du réseau IMS donneur RD1 stocke les identifiants publics des utilisateurs (anciennement et nouvellement abonnés) en correspondance d'identifiants privés (désignant le nom de domaine de leur réseau IMS receveur (ou d'abonnement)).

Lorsque le terminal appelant UE1 veut établir une communication avec le terminal appelé UE2, il transmet un message de demande d'établissement de communication, par exemple de type SIP INVITE, au réseau IMS donneur RD1, à destination du terminal appelé UE2 qui est connecté à un réseau IMS inconnu à ce stade. Ce message de demande d'établissement de communication comprend notamment (dans l'exemple) l'identifiant public IPU1 dans un champ source d'entête, l'identifiant public IPU2 dans un champ destinataire d'entête et l'adresse IP du terminal appelant UE1. Il est acheminé jusqu'au module P-CSCF du réseau IMS donneur RD1, qui lui adjoint son adresse IP. Le module P-CSCF s'apercevant que le nom de domaine du réseau IMS désigné par l'identifiant public IPU2 est le même que celui de son réseau IMS donneur RD1, il le transmet au module S-CSCF de ce dernier (flèche F1), qui est chargé de l'établissement des communications pour les terminaux UE1 des utilisateurs abonnés.

A réception du message, le module S-CSCF du réseau IMS donneur RD1 accède (flèche F2) au module HSS de ce dernier (par exemple au moyen d'une requête de type UAR DIAMETER contenant l'identifiant public IPU2 du terminal appelé UE2 afin qu'il détermine l'opérateur auprès duquel l'utilisateur du terminal appelé UE2 est maintenant abonné et plus précisément le nom de domaine de son réseau IMS receveur (ici RR2). L'utilisateur du terminal appelé UE2 n'étant plus abonné au réseau IMS donneur RD1, mais au réseau receveur RR2, le module HSS communique au module S-CSCF (lors de son interrogation par ce dernier) le nom de domaine du réseau receveur RR2 et l'identifiant privé IPR2 de l'utilisateur du terminal appelé UE2. Le module S-CSCF accède ensuite au module DNS de son réseau IMS donneur RD1 (flèche F3) afin de déterminer l'adresse IP du module I-CSCF du réseau IMS receveur RR2. Il peut alors transmettre au (ou router vers le) module I-CSCF du réseau IMS receveur RR2 (flèche F4) le message de demande d'établissement de communication reçu.

A réception de ce message, le module I-CSCF du réseau IMS receveur RR2 accède (flèche F5) au module HSS de ce dernier (par exemple au moyen d'une requête de type UAR DIAMETER contenant l'identifiant public IPU2 et l'identifiant privé IPR2 afin qu'il vérifie le statut de l'utilisateur désigné. Dans cet exemple, le terminal appelé UE2 est connecté à un réseau IMS visité RV2, et son abonnement le lui permet. Par conséquent, le module HSS autorise le module I-CSCF à poursuivre la phase d'établissement de communication. Le module I-CSCF transmet alors le message de demande d'établissement de communication au module S-CSCF de son réseau IMS receveur RR2 (flèche F6), qui le transmet au (ou route vers le) module P-CSCF du réseau IMS visité RV2 (flèche F7).

A réception de ce message, le module P-CSCF du réseau IMS visité RV2 le transmet au terminal appelé UE2.

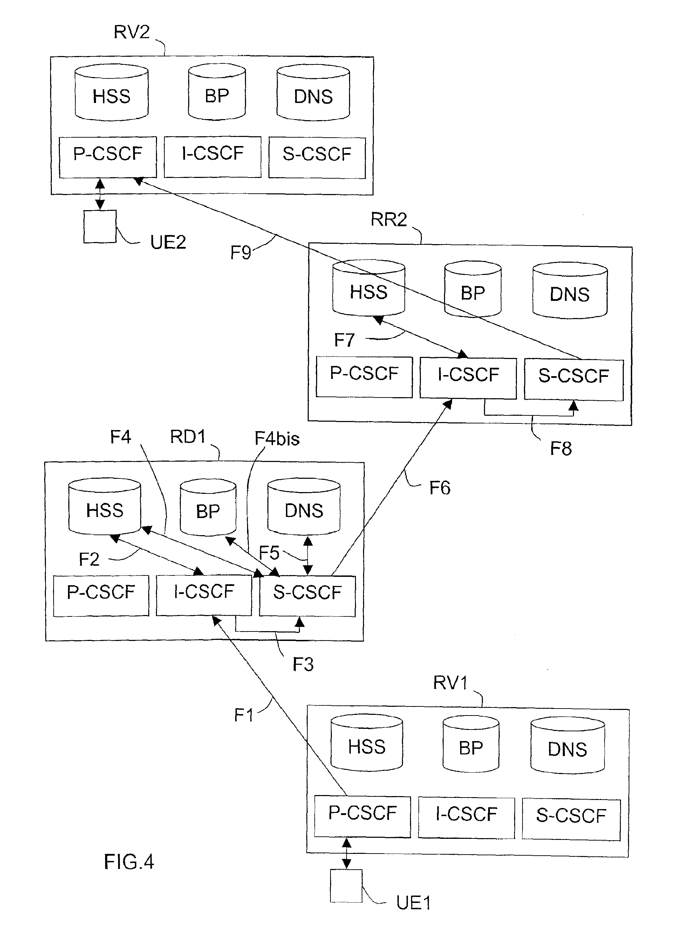

Le deuxième exemple illustré sur la figure 4 représente une situation dans laquelle le terminal appelant UE1 connaît à la fois l'identifiant public IPU1 de son utilisateur et l'identifiant public IPU2 de l'utilisateur du terminal appelé UE2. On considère ici que le terminal appelant UE1 est abonné à un réseau IMS donneur RD1 mais qu'il est connecté à un réseau IMS visité RV1, et que l'utilisateur du terminal appelé UE2 était initialement abonné auprès de ce même réseau IMS donneur RD1, mais que ce n'est plus le cas. On considère également ici que le module HSS du réseau IMS donneur RD1 stocke les identifiants publics des utilisateurs (anciennement et nouvellement abonnés) en correspondance d'identifiants privés (désignant le nom de domaine de leur réseau IMS receveur (ou d'abonnement)).

Lorsque le terminal appelant UE1 veut établir une communication avec le terminal appelé UE2, il transmet un message de demande d'établissement de communication, par exemple de type SIP INVITE, au réseau IMS visité RV1, à destination du terminal appelé UE2 qui est connecté à un réseau IMS inconnu à ce stade. Ce message de demande d'établissement de communication comprend notamment (dans l'exemple) l'identifiant public IPU1 dans un champ source d'entête, l'identifiant public IPU2 dans un champ destinataire d'entête et l'adresse IP du terminal appelant UE1. Il est acheminé jusqu'au module P-CSCF du réseau IMS visité RV1, qui lui adjoint son adresse IP. Le module P-CSCF déduit de l'identifiant public IPU1 le nom de domaine du réseau IMS donneur RD1 du terminal appelant UE1. Il transmet le message de demande d'établissement de communication au module I-CSCF du réseau IMS donneur RD1 du terminal appelant UE1 (flèche F1), après avoir déterminé l'adresse IP de ce module I-CSCF dans le module DNS.

A réception de ce message, le module I-CSCF du réseau IMS donneur RD1 accède (flèche F2) au module HSS de ce dernier (par exemple au moyen d'une requête de type UAR DIAMETER contenant l'identifiant public IPU1 afin qu'il vérifie le statut de l'utilisateur appelant. Dans cet exemple, le terminal appelant UE1 est autorisé à se connecter à un réseau IMS visité RV1. Par conséquent, le module HSS autorise le module I-CSCF à poursuivre la phase d'établissement de communication. Le module I-CSCF transmet alors le message de demande d'établissement de communication au module S-CSCF de son réseau IMS donneur RD1 (flèche F3). Ce dernier s'apercevant que le nom de domaine du réseau IMS désigné par l'identifiant public IPU2 est le même que celui de son réseau IMS donneur RD1, il accède (flèche F4) au module HSS (mais cela pourrait être la base de portabilité BP (flèche F4bis)) de ce dernier (par exemple au moyen d'une requête de type UAR DIAMETER contenant l'identifiant public IPU2 du terminal appelé UE2 afin qu'il détermine l'opérateur auprès duquel l'utilisateur du terminal appelé UE2 est maintenant abonné et plus précisément le nom de domaine de son réseau IMS receveur (ici RR2). L'utilisateur du terminal appelé UE2 n'étant plus abonné au réseau IMS donneur RD1, mais au réseau receveur RR2, le module HSS communique au module S-CSCF (lors de son interrogation par ce dernier) le nom de domaine du réseau receveur RR2 et l'identifiant privé IPR2 de l'utilisateur du terminal appelé UE2. Le module S-CSCF accède ensuite au module DNS de son réseau IMS donneur RD1 (flèche F5) afin de déterminer l'adresse IP du module I-CSCF du réseau IMS receveur RR2. Il peut alors transmettre au (ou router vers le) module I-CSCF du réseau IMS receveur RR2 (flèche F6) le message de demande d'établissement de communication reçu.

A réception de ce message, le module I-CSCF du réseau IMS receveur RR2 accède (flèche F7) au module HSS de ce dernier (par exemple au moyen d'une requête de type UAR DIAMETER contenant l'identifiant public IPU2 et l'identifiant privé IPR2 afin qu'il vérifie le statut de l'utilisateur désigné. Dans cet exemple, le terminal appelé UE2 est connecté à un réseau IMS visité RV2, et son abonnement le lui permet. Par conséquent, le module HSS autorise le module I-CSCF à poursuivre la phase d'établissement de communication. Le module I-CSCF transmet alors le message de demande d'établissement de communication au module S-CSCF de son réseau IMS receveur RR2 (flèche F8), qui le transmet au (ou route vers le) module P-CSCF du réseau IMS visité RV2 (flèche F9).

A réception de ce message, le module P-CSCF du réseau IMS visité RV2 le transmet au terminal appelé UE2.

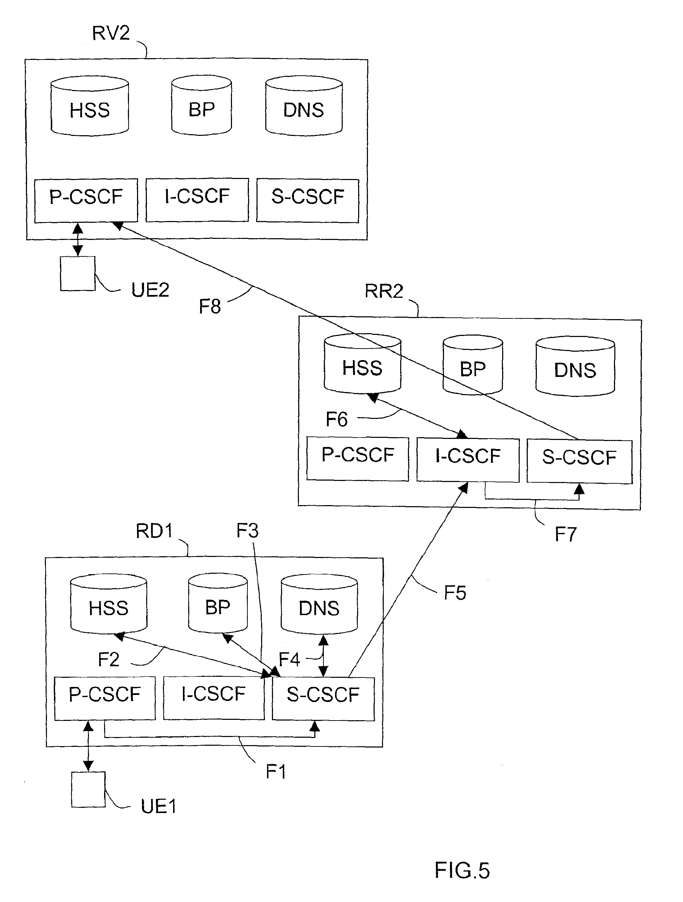

Le troisième exemple illustré sur la figure 5 représente une situation dans laquelle le terminal appelant UE1 connaît à la fois l'identifiant public IPU1 de son utilisateur et l'identifiant public IPU2 de l'utilisateur du terminal appelé UE2. On considère ici que le terminal appelant UE1 est connecté à son réseau IMS donneur RD1 et que l'utilisateur du terminal appelé UE2 était initialement abonné auprès de ce même réseau IMS donneur RD1, mais que ce n'est plus le cas. On considère également que c'est ici le module de portabilité BP du réseau IMS donneur RD1 qui stocke les identifiants publics des utilisateurs (anciennement et nouvellement abonnés) en correspondance d'identifiants privés (désignant le nom de domaine de leur réseau IMS receveur (ou d'abonnement)).

Lorsque le terminal appelant UE1 veut établir une communication avec le terminal appelé UE2, il transmet un message de demande d'établissement de communication, par exemple de type SIP INVITE, au réseau IMS donneur RD1, à destination du terminal appelé UE2 qui est connecté à un réseau IMS inconnu à ce stade. Ce message de demande d'établissement de communication comprend notamment (dans l'exemple) l'identifiant public IPU1 dans un champ source d'entête, l'identifiant public IPU2 dans un champ destinataire d'entête et l'adresse IP du terminal appelant UE1. Il est acheminé jusqu'au module P-CSCF du réseau IMS donneur RD1, qui lui adjoint son adresse IP. Le module P-CSCF s'apercevant que le nom de domaine du réseau IMS désigné par l'identifiant public IPU2 est le même que celui de son réseau IMS donneur RD1, il le transmet au module S-CSCF de ce dernier (flèche F1), qui est chargé de l'établissement des communications pour les terminaux UE1 des utilisateurs abonnés.

A réception du message, le module S-CSCF du réseau IMS donneur RD1 accède (flèche F2) au module HSS de ce dernier (par exemple au moyen d'une requête de type UAR DIAMETER contenant l'identifiant public IPU2 du terminal appelé UE2 afin qu'il détermine l'opérateur auprès duquel l'utilisateur du terminal appelé UE2 est maintenant abonné et plus précisément le nom de domaine de son réseau IMS (ici RR2). L'utilisateur du terminal appelé UE2 n'étant plus abonné au réseau IMS donneur RD1 et le module HSS ne stockant pas son identifiant privé IPR2, le module HSS retourne au module S-CSCF un message d'erreur.

A réception de ce message d'erreur, le module S-CSCF accède (flèche F3) au module de portabilité BP dans lequel sont stockés les identifiants privés des utilisateurs anciennement et nouvellement abonnés en correspondance de leurs identifiants publics respectifs. Cette accession peut par exemple se faire au moyen d'un message DIAMETER. Le module de portabilité BP communique alors au module S-CSCF (lors de son interrogation par ce dernier) le nom de domaine du réseau receveur RR2 et l'identifiant privé IPR2 de l'utilisateur du terminal appelé UE2. Le module S-CSCF accède ensuite au module DNS de son réseau IMS donneur RD1 (flèche F4) afin de déterminer l'adresse IP du module I-CSCF du réseau IMS receveur RR2. Il peut alors transmettre au (ou router vers le) module I-CSCF du réseau IMS receveur RR2 (flèche F5) le message de demande d'établissement de communication reçu.

A réception de ce message, le module I-CSCF du réseau IMS receveur RR2 accède (flèche F6) au module HSS de ce dernier (par exemple au moyen d'une requête de type UAR DIAMETER contenant l'identifiant public IPU2 et l'identifiant privé IPR2 afin qu'il vérifie le statut de l'utilisateur désigné. Dans cet exemple, le terminal appelé UE2 est connecté à un réseau IMS visité RV2, et son abonnement le lui permet. Par conséquent, le module HSS autorise le module I-CSCF à poursuivre la phase d'établissement de communication. Le module I-CSCF transmet alors le message de demande d'établissement de communication au module S-CSCF de son réseau IMS receveur RR2 (flèche F7), qui le transmet au (ou route vers le) module P-CSCF du réseau IMS visité RV2 (flèche F8).

A réception de ce message, le module P-CSCF du réseau IMS visité RV2 le transmet au terminal appelé UE2.

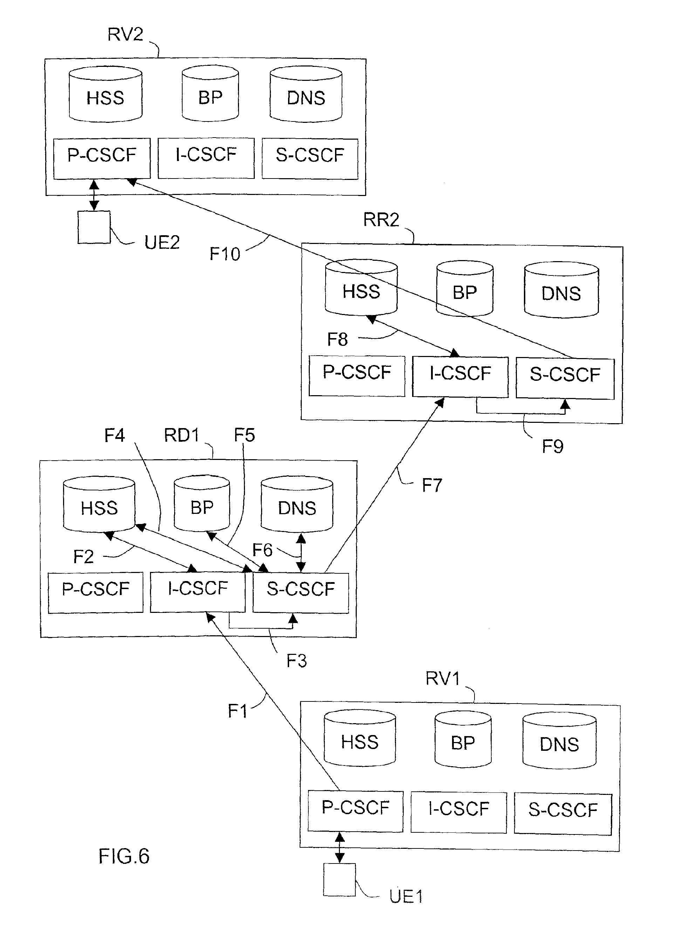

Le quatrième exemple illustré sur la figure 6 représente une situation dans laquelle le terminal appelant UE1 connaît à la fois l'identifiant public IPU1 de son utilisateur et l'identifiant public IPU2 de l'utilisateur du terminal appelé UE2. On considère ici que le terminal appelant UE1 est abonné à un réseau IMS donneur RD1 mais qu'il est connecté à un réseau IMS visité RV1, et que l'utilisateur du terminal appelé UE2 était initialement abonné auprès de ce même réseau IMS donneur RD1, mais que ce n'est plus le cas. On considère également que c'est ici le module de portabilité BP du réseau IMS donneur RD1 qui stocke les identifiants publics des utilisateurs (anciennement et nouvellement abonnés) en correspondance d'identifiants privés (désignant le nom de domaine de leur réseau IMS receveur (ou d'abonnement)).

Lorsque le terminal appelant UE1 veut établir une communication avec le terminal appelé UE2, il transmet un message de demande d'établissement de communication, par exemple de type SIP INVITE, au réseau IMS visité RV1, à destination du terminal appelé UE2 qui est connecté à un réseau IMS inconnu à ce stade. Ce message de demande d'établissement de communication comprend notamment (dans l'exemple) l'identifiant public IPU1 dans un champ source d'entête, l'identifiant public IPU2 dans un champ destinataire d'entête et l'adresse IP du terminal appelant UE1. Il est acheminé jusqu'au module P-CSCF du réseau IMS visité RV1, qui lui adjoint son adresse IP. Le module P-CSCF déduit de l'identifiant public IPU1 le nom de domaine du réseau IMS RD1 qui est le réseau de domicile du terminal appelant UE1 et le réseau donneur de l'appelé. Il transmet le message de demande d'établissement de communication au module I-CSCF du réseau IMS donneur RD1 du terminal appelant UE1 (flèche F1), après avoir déterminé l'adresse IP de ce module I-CSCF dans le module DNS.

A réception de ce message, le module I-CSCF du réseau IMS donneur RD1 accède (flèche F2) au module HSS de ce dernier (par exemple au moyen d'une requête de type UAR DIAMETER contenant l'identifiant public IPUL afin qu'il vérifie le statut de l'utilisateur appelant. Dans cet exemple, le terminal appelant UE1 est autorisé à se connecter à un réseau IMS visité RV1. Par conséquent, le module HSS autorise le module I-CSCF à poursuivre la phase d'établissement de communication. Le module I-CSCF transmet alors le message de demande d'établissement de communication au module S-CSCF de son réseau IMS donneur RD1 (flèche F3). Ce dernier s'apercevant que le nom de domaine du réseau IMS désigné par l'identifiant public IPU2 est le même que celui de son réseau IMS donneur RD1, il accède (flèche F4) au module HSS de ce dernier (par exemple au moyen d'une requête de type UAR DIAMETER contenant l'identifiant public IPU2 du terminal appelé UE2 afin qu'il détermine l'opérateur auprès duquel l'utilisateur du terminal appelé UE2 est maintenant abonné et plus précisément le nom de domaine de son réseau IMS (ici RR2). L'utilisateur du terminal appelé UE2 n'étant plus abonné au réseau IMS donneur RD1 et le module HSS ne stockant pas son identifiant privé IPR2, le module HSS retourne au module S-CSCF un message d'erreur.

A réception de ce message d'erreur, le module S-CSCF accède (flèche F5) au module de portabilité BP dans lequel sont stockés les identifiants privés des utilisateurs anciennement et nouvellement abonnés en correspondance de leurs identifiants publics respectifs. Cette accession peut par exemple se faire au moyen d'un message DIAMETER. Le module de portabilité BP communique alors au module S-CSCF (lors de son interrogation par ce dernier) le nom de domaine du réseau receveur RR2 et l'identifiant privé IPR2 de l'utilisateur du terminal appelé UE2. Le module S-CSCF accède ensuite au module DNS de son réseau IMS donneur RD1 (flèche F6) afin de déterminer l'adresse IP du module I-CSCF du réseau IMS receveur RR2. Il peut alors transmettre au (ou router vers le) module I-CSCF du réseau IMS receveur RR2 (flèche F7) le message de demande d'établissement de communication reçu.

A réception de ce message, le module I-CSCF du réseau IMS receveur RR2 accède (flèche F8) au module HSS de ce dernier (par exemple au moyen d'une requête de type UAR DIAMETER contenant l'identifiant public IPU2 et l'identifiant privé IPR2 afin qu'il vérifie le statut de l'utilisateur désigné. Dans cet exemple, le terminal appelé UE2 est connecté à un réseau IMS visité RV2, et son abonnement le lui permet. Par conséquent, le module HSS autorise le module I-CSCF à poursuivre la phase d'établissement de communication. Le module I-CSCF transmet alors le message de demande d'établissement de communication au module S-CSCF de son réseau IMS receveur RR2 (flèche F9), qui le transmet au (ou route vers le) module P-CSCF du réseau IMS visité RV2 (flèche F10).

A réception de ce message, le module P-CSCF du réseau IMS visité RV2 le transmet au terminal appelé UE2.

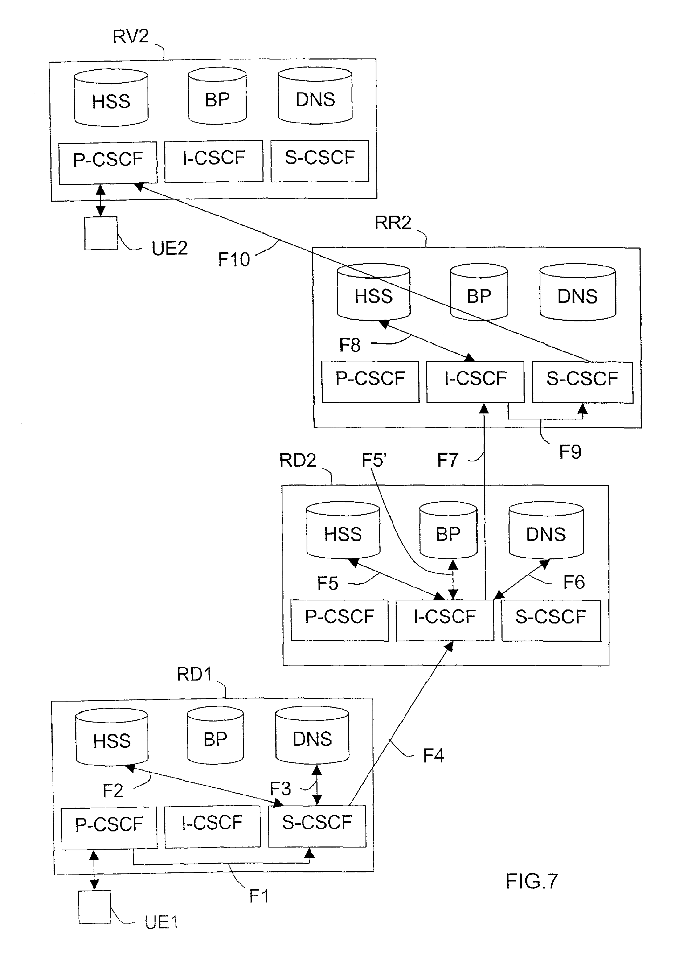

Le cinquième exemple illustré sur la figure 7 représente une situation dans laquelle le terminal appelant UE1 connaît à la fois l'identifiant public IPU1 de son utilisateur et l'identifiant public IPU2 de l'utilisateur du terminal appelé UE2. On considère ici que le terminal appelant UE1 est connecté à son réseau IMS donneur RD1 et que l'utilisateur du terminal appelé UE2 était initialement abonné auprès d'un autre réseau IMS donneur RD2, mais que ce n'est plus le cas. On considère également ici que le module HSS du réseau IMS donneur RD1 stocke les identifiants publics des utilisateurs (anciennement et nouvellement abonnés) en correspondance d'identifiants privés (désignant le nom de domaine de leur réseau IMS receveur (ou d'abonnement)).

Lorsque le terminal appelant UE1 veut établir une communication avec le terminal appelé UE2, il transmet un message de demande d'établissement de communication, par exemple de type SIP INVITE, au réseau IMS donneur RD1 (ne supportant pas la portabilité), à destination du terminal appelé UE2 qui est connecté à un réseau IMS inconnu à ce stade. Ce message de demande d'établissement de communication comprend notamment (dans l'exemple) l'identifiant public IPU1 dans un champ source d'entête, l'identifiant public IPU2 dans un champ destinataire d'entête et l'adresse IP du terminal appelant UE1. Il est acheminé jusqu'au module P-CSCF du réseau IMS donneur RD1, qui lui adjoint son adresse IP. Le module P-CSCF transmet le message d'établissement d'appel au module S-CSCF, déjà connu lors de l'enregistrement (flèche F1), qui est chargé de l'établissement des communications pour les terminaux UE1 des utilisateurs abonnés.

A réception du message, le module S-CSCF du réseau IMS donneur RD1 accède (flèche F2) au module HSS de ce dernier (par exemple au moyen d'une requête de type UAR DIAMETER contenant l'identifiant public IPU2 du terminal appelé UE2 afin qu'il tente de déterminer l'opérateur auprès duquel l'utilisateur du terminal appelé UE2 est maintenant abonné et plus précisément le nom de domaine de son réseau IMS receveur (ici RR2). L'utilisateur du terminal appelé UE2 n'ayant jamais été abonné au réseau IMS donneur RD1, mais ayant été initialement abonné au réseau donneur RD2, le module HSS déduit de l'identifiant public IPU2 le nom de domaine du réseau IMS donneur RD2 et le communique au module S-CSCF. Le module S-CSCF accède ensuite au module DNS de son réseau IMS donneur RD1 (flèche F3) afin de déterminer l'adresse IP du module I-CSCF du réseau IMS donneur RD2. Il peut alors transmettre au (ou router vers le) module I-CSCF du réseau IMS donneur RD2 (flèche F4) le message de demande d'établissement de communication reçu.

A réception de ce message, le module I-CSCF du réseau IMS donneur RD2 accède (flèche F6) au module HSS de ce dernier (par exemple au moyen d'une requête de type UAR DIAMETER contenant l'identifiant public IPU2 afin qu'il vérifie le statut de l'utilisateur désigné. Dans cet exemple, le terminal appelé UE2 n'est plus abonné au réseau IMS donneur RD2, mais à un réseau IMS receveur RR2. Par conséquent, le module HSS communique au module I-CSCF le nom de domaine du réseau IMS receveur RR2. Si les identifiants publics et privés sont stockés dans le module de portabilité BP, alors le module I-CSCF doit accéder au module de portabilité BP (flèche F5' en pointillés) afin de déterminer l'identifiant privé IPR2 de l'utilisateur du terminal appelé UE2 qu'il stocke en correspondance de son identifiant public IPU2 contenu dans le message reçu.

Le module I-CSCF accède ensuite au module DNS de son réseau IMS donneur RD2 (flèche F6) afin de déterminer l'adresse IP du module I-CSCF du réseau IMS receveur RR2. Il peut alors transmettre au (ou router vers le) module I-CSCF du réseau IMS receveur RR2 (flèche F7) le message de demande d'établissement de communication reçu.

A réception de ce message, le module I-CSCF du réseau IMS receveur RR2 accède (flèche F8) au module HSS de ce dernier (par exemple au moyen d'une requête de type UAR DIAMETER contenant l'identifiant public IPU2 et l'identifiant privé IPR2 afin qu'il vérifie le statut de l'utilisateur désigné. Dans cet exemple, le terminal appelé UE2 est connecté à un réseau IMS visité RV2, et son abonnement le lui permet. Par conséquent, le module HSS autorise le module I-CSCF à poursuivre la phase d'établissement de communication. Le module I-CSCF transmet alors le message de demande d'établissement de communication au module S-CSCF de son réseau IMS receveur RR2 (flèche F9), qui le transmet au (ou route vers le) module P-CSCF du réseau IMS visité RV2 (flèche F10).

A réception de ce message, le module P-CSCF du réseau IMS visité RV2 le transmet au terminal appelé UE2.

Il est important de noter que les situations décrites ci-avant en référence aux figures 2 à 7 ne sont que des exemples permettant d'illustrer la mise en oeuvre de l'invention. De nombreuses autres situations peuvent être envisagées, notamment lorsque le terminal appelant UE2 est connecté à son réseau IMS receveur RR2 et/ou que le terminal appelé est connecté à un réseau IMS visité différent de son réseau IMS donneur ou de son réseau IMS receveur.

Il est également important de noter que les modules P-CSCF peuvent être éventuellement adaptés de manière à effectuer l'interrogation du module (ou base) de portabilité et/ou du module HSS (étendu) de leur réseau IMS, afin d'optimiser le routage dans les réseaux IMS. Mais, il est préférable de concentrer la fonctionnalité d'interrogation de la base de portabilité ou du module HSS dans le module I-CSCF afin de résoudre la portabilité de l'appelant, et dans le module S-CSCF afin de résoudre la portabilité de l'appelé. En effet, si le réseau IMS qui est visité par un appelant ne supporte pas la portabilité ou s'il appartient à une zone de portabilité différente, alors le message d'enregistrement initié par l'appelant est envoyé par le module P-CSCF du réseau visité vers le module I-CSCF du réseau donneur de l'appelant (auquel ce dernier n'est plus abonné). Dans ce cas, le module I-CSCF du réseau donneur va devoir accéder à son module HSS ou à la base de portabilité afin de déterminer le nom de domaine du réseau IMS receveur auprès duquel cet utilisateur appelant est actuellement abonné, puis accéder au module DNS afin de déterminer l'adresse IP du module de type I-CSCF du réseau IMS dont le nom de domaine a été déterminé de manière à lui transmettre le message en vue de son traitement.

De même, si un appel (ou une session) est initié(e) dans un réseau IMS qui ne supporte pas la portabilité, le message d'établissement d'appel (ou de session) est envoyé vers le module I-CSCF du réseau donneur de l'appelé (auquel ce dernier n'est plus abonné). Dans ce cas, le module I-CSCF du réseau donneur de l'appelé va devoir accéder au module HSS pour déterminer le module S-CSCF qui gère cet abonné. Le message d'établissement d'appel (ou de session) est alors envoyé vers le module S-CSCF déterminé. Ce dernier utilise alors l'identifiant public contenu dans le message reçu pour accéder au module HSS ou à la base de portabilité dans le but de retrouver le nom de domaine du réseau IMS receveur de l'appelé (ou l'identifiant privé et en déduire ensuite le nom de domaine du réseau IMS receveur de l'appelé). Puis, le module S-CSCF accède au module de type DNS afin de déterminer l'adresse IP du module I-CSCF du réseau IMS dont le nom de domaine a été déterminé pour lui transmettre ce message en vue de son traitement.

On notera également que le module P-CSCF et/ou le module I-CSCF et/ou le module S-CSCF peuve(n)t être éventuellement agencé(s) de manière à adjoindre à un message reçu, qui doit être transmis, une information permettant de signaler qu'il vient de déterminer le nom de domaine d'un utilisateur appelant ou appelé à partir de son identifiant privé d'utilisateur qui est stocké en correspondance de son identifiant public d'utilisateur. Cela permet d'éviter d'avoir à traiter de façon répétitive un identifiant public (SIP URI ou Tel URI) « porté hors » ou « porté dans ». Par exemple, cette information peut être intégrée dans le champ source d'entête ou dans le champ destinataire d'entête au moyen d'un mot clé de vérification de portabilité. Elle peut être constituée à partir de l'état de portabilité.

On notera encore que l'extension du module HSS et/ou le module de portabilité peu(ven)t éventuellement stocker des informations complémentaires en complément des identifiants publics et privés qui se correspondent, et notamment un numéro de téléphone de type E164 et/ou un numéro de routage et/ou un autre identifiant public (SIP URI ou Tel URI) et/ou un nom de domaine destinataire.

On notera encore que les modules I/P/S-CSCF peuvent éventuellement être adaptés de manière à accéder au module HSS du réseau qui est désigné par un identifiant public, afin d'obtenir l'identifiant privé d'un abonné qui a initié une session dans leur propre réseau 1MS et dont le nom de domaine du réseau IMS (qui est désigné par son identifiant public) n'est pas le même que celui du réseau considéré. Ils peuvent également et éventuellement accéder à la base de portabilité du réseau IMS qui est désigné par l'identifiant public de l'abonné qui a initié une session d'enregistrement ou d'appel. De même, les modules I-CSCF et S-CSCF du réseau de domicile de l'appelant peuvent éventuellement accéder directement au module HSS ou à la base de portabilité du réseau IMS qui est désigné par l'identifiant public de l'appelé afin de retrouver son identifiant privé ou le nom de domaine du réseau IMS receveur de l'appelé.

L'invention ne se limite pas aux modes de réalisation de réseau (ou domaine) IMS, de module de type P-CSCF, de module de type S-CSCF, de module de type I-CSCF, de module de type HSS et de module de portabilité décrits ci-avant, seulement à titre d'exemple, mais elle englobe toutes les variantes que pourra envisager l'homme de l'art dans le cadre des revendications ci-après.

Ainsi, dans ce qui précède on a décrit des mises en oeuvre de l'invention dans le cas de terminaux de communication associés à des identifiants publics de type SIP URI. Mais, l'invention s'applique également aux terminaux de communication qui sont associés à des identifiants publics de type Tel URI. Il est en effet possible de convertir un numéro de type E164 (par exemple 33 1 30 77 99 99) en un numéro au format SIP URI (par exemple 9.5.2.5.7.7.0.3.1.3.3.e164.arpa) ou au format SIP:+33130779999@IMS-domain. Il est également possible de stocker le numéro converti dans l'extension du module HSS et/ou dans le module de portabilité, et d'interroger ce(s) dernier(s) avec l'identifiant privé MSISDN de manière à déterminer un préfixe de numéro de routage (ou RN pour (« Routeing Number Prefix »)) ou à l'étendre au nom de domaine. Un tel numéro de routage peut être transformé en un nom de domaine du réseau IMS destinataire qui peut être converti par un module DNS en adresse IP du module I-CSCF auquel un message d'enregistrement doit être transmis.

## Revendications

1. Réseau de communication de type IMS (RD1, RD2), associé à un nom de domaine et comprenant un module de stockage d'informations d'utilisateurs de type HSS, un module de conversion de noms de domaine en adresses IP de type DNS, un module de type P-CSCF couplé audit module de type DNS, et des modules de type S-CSCF et de type I-CSCF couplés auxdits modules de type DNS et de type HSS, **caractérisé en ce qu'**il stocke, pour des utilisateurs ayant déjà souscrits chacun un abonnement auprès de l'opérateur dudit réseau IMS, un identifiant public d'utilisateur, désignant un nom de domaine de réseau IMS donneur, en correspondance d'un identifiant privé d'utilisateur, désignant le nom de domaine du réseau IMS receveur auprès duquel il est actuellement abonné et/ou du nom de domaine de ce réseau IMS receveur, et **en ce que** certains au moins desdits modules de type CSCF sont agencés, en cas de réception d'un message à transmettre comprenant un identifiant public et/ou un identifiant privé d'un utilisateur, pour accéder auxdits identifiants publics d'utilisateurs stockés en correspondance desdits identifiants privés d'utilisateurs et/ou des noms de domaine des réseaux IMS receveurs des utilisateurs pour déterminer le nom de domaine du réseau IMS receveur auprès duquel cet utilisateur est actuellement abonné, puis pour accéder audit module de type DNS pour déterminer l'adresse IP du module de type I-CSCF du réseau IMS receveur dont ledit nom de domaine a été déterminé de manière à lui transmettre ledit message en vue de son traitement.

2. Réseau selon la revendication 1, **caractérisé en ce que** certains au moins desdits identifiants publics d'utilisateurs sont stockés en correspondance d'identifiants privés d'utilisateurs et/ou de noms de domaine de réseaux IMS receveurs dans ledit module de type HSS.

3. Réseau selon l'une des revendications 1 et 2, **caractérisé en ce qu'**il comprend un module de portabilité (BP) agencé pour stocker certains au moins desdits identifiants publics d'utilisateurs en correspondance d'identifiants privés d'utilisateurs et/ou de noms de domaine de réseaux IMS receveurs.

4. Réseau selon l'une des revendications 2 et 3, **caractérisé en ce que** certains au moins des identifiants publics d'utilisateurs sont stockés en correspondance d'états de portabilité signalant si un utilisateur est ou n'est plus abonné à un réseau IMS considéré.

5. Réseau selon l'une des revendications 1 à 4, **caractérisé en ce que** ledit module de type I-CSCF est agencé, en cas de réception d'un message d'enregistrement à transmettre comprenant un identifiant public d'un utilisateur appelant souhaitant s'enregistrer auprès du réseau IMS receveur auquel il est abonné, pour accéder auxdits identifiants publics d'utilisateurs stockés en correspondance desdits identifiants privés d'utilisateurs et/ou desdits noms de domaine de réseaux IMS receveurs afin de déterminer le nom de domaine du réseau IMS receveur de l'appelant ou bien l'identifiant privé qui correspond à l'identifiant public contenu dans le message et dans le second cas déduire de cet identifiant privé le nom de domaine du réseau IMS receveur auprès duquel cet utilisateur appelant est actuellement abonné, puis pour accéder audit module de type DNS pour déterminer l'adresse IP du module de type I-CSCF du réseau IMS dont ledit nom de domaine a été déterminé de manière à lui transmettre ledit message en vue de son traitement.

6. Réseau selon l'une des revendications 2, 3 et 5, **caractérisé en ce que** ledit module de type S-CSCF est agencé, en cas de réception d'un message d'établissement de session d'un utilisateur appelant, abonné audit réseau IMS, à transmettre à un utilisateur appelé et comprenant des identifiants publics d'utilisateurs appelant et appelé, pour accéder audit module de type HSS pour déterminer le nom de domaine du réseau IMS receveur de l'appelé ou bien l'identifiant privé qui correspond à l'identifiant public contenu dans ledit message et dans le second cas déduire de cet identifiant privé le nom de domaine du réseau IMS receveur auprès duquel cet utilisateur appelé est actuellement abonné, puis pour accéder audit module de type DNS pour déterminer l'adresse IP du module de type I-CSCF du réseau IMS dont ledit nom de domaine a été déterminé de manière à lui transmettre ledit message en vue de son traitement.

7. Réseau selon l'une des revendications 2 à 5, **caractérisé en ce que** ledit module de type I-CSCF est agencé, en cas de réception d'un message initié dans un réseau IMS visité d'un utilisateur appelant, abonné audit réseau IMS, à transmettre à un utilisateur appelé, abonné à un autre réseau IMS, et comprenant des identifiants publics d'utilisateurs appelant et appelé, pour accéder audit module de type HSS de son réseau IMS pour déterminer le module de type S-CSCF correspondant à l'identifiant public de l'utilisateur appelant contenu dans ledit message de manière à lui transmettre ledit message, et **en ce que** ledit module de type S-CSCF est agencé, en cas de réception dudit message en provenance dudit module de type I-CSCF de son réseau IMS, pour accéder audit module de type HSS ou audit module de portabilité (BP) de son réseau IMS pour déterminer le nom de domaine du réseau IMS receveur de l'appelé ou bien l'identifiant privé qui correspond à l'identifiant public contenu dans le message et dans le second cas déduire de cet identifiant privé le nom de domaine du réseau IMS receveur auprès duquel cet utilisateur appelé est actuellement abonné, puis pour accéder audit module de type DNS pour déterminer l'adresse IP du module de type I-CSCF du réseau IMS dont ledit nom de domaine a été déterminé de manière à lui transmettre ledit message en vue de son traitement.

8. Réseau selon l'une des revendications 2 à 5, **caractérisé en ce que** ledit module de type S-CSCF est agencé, en cas de réception d'un message d'un utilisateur appelant, abonné audit réseau IMS, à transmettre à un utilisateur appelé, abonné à un autre réseau IMS, et comprenant des identifiants publics d'utilisateurs appelant et appelé, pour accéder audit module de type HSS pour déterminer si un identifiant privé de l'utilisateur appelé est stocké en correspondance dudit identifiant public de cet utilisateur appelé contenu dans ledit message, et dans la négative pour accéder audit module de portabilité (BP) pour déterminer le nom de domaine du réseau IMS receveur de l'appelé ou bien l'identifiant privé qui correspond à l'identifiant public contenu dans le message et dans le second cas déduire de cet identifiant privé le nom de domaine du réseau IMS receveur auprès duquel cet utilisateur appelé est actuellement abonné, puis pour accéder audit module de type DNS pour déterminer l'adresse IP du module de type I-CSCF du réseau IMS dont ledit nom de domaine a été déterminé de manière à lui transmettre ledit message en vue de son traitement.

9. Réseau selon l'une des revendications 2 à 5, **caractérisé en ce que** ledit module de type I-CSCF est agencé, en cas de réception d'un message d'un utilisateur appelant, abonné audit réseau IMS, à transmettre à un utilisateur appelé, abonné à un autre réseau IMS, et comprenant des identifiants publics d'utilisateurs appelant et appelé, pour accéder audit module de type HSS de son réseau IMS pour déterminer le module de type S-CSCF correspondant à l'identifiant public de l'utilisateur appelant contenu dans ledit message de manière à lui transmettre ledit message, et **en ce que** ledit module de type S-CSCF est agencé, en cas de réception dudit message en provenance dudit module de type I-CSCF, pour accéder audit module de type HSS de son réseau IMS pour déterminer si un identifiant privé de l'utilisateur appelé est stocké en correspondance dudit identifiant public de cet utilisateur appelé contenu dans ledit message, et dans la négative pour accéder audit module de portabilité (BP) pour déterminer le nom de domaine du réseau IMS receveur de l'appelé ou bien l'identifiant privé qui correspond à l'identifiant public contenu dans le message et dans le second cas déduire de cet identifiant privé le nom de domaine du réseau IMS receveur auprès duquel cet utilisateur appelé est actuellement abonné, puis pour accéder audit module de type DNS pour déterminer l'adresse IP du module de type I-CSCF du réseau IMS dont ledit nom de domaine a été déterminé de manière à lui transmettre ledit message en vue de son traitement.

10. Réseau selon l'une des revendications 2 à 9, **caractérisé en ce que** ledit module de type S-CSCF est agencé, en cas de réception d'un message destiné à un utilisateur appelé, abonné à un autre réseau IMS, et comprenant un identifiant public d'utilisateur appelé, pour accéder audit module de type HSS pour déterminer l'identifiant privé de l'utilisateur appelé stocké en correspondance dudit identifiant public de cet utilisateur appelé contenu dans ledit message et déduire de cet identifiant privé le nom de domaine du réseau IMS auprès duquel cet utilisateur est actuellement abonné, puis pour accéder audit module de type DNS pour déterminer l'adresse IP du module de type I-CSCF du réseau IMS dont ledit nom de domaine a été déterminé de manière à lui transmettre ledit message en vue de son traitement.

11. Réseau selon l'une des revendications 2 à 9, **caractérisé en ce que** ledit module de type S-CSCF est agencé, en cas de réception d'un message destiné à un utilisateur appelé, abonné à un autre réseau IMS, et comprenant un identifiant public d'utilisateur appelé, pour accéder audit module de type HSS pour déterminer si un identifiant privé de l'utilisateur appelé est stocké en correspondance dudit identifiant public de cet utilisateur appelé contenu dans ledit message, et dans la négative pour accéder audit module de portabilité (BP) pour déterminer le nom de domaine du réseau IMS receveur de l'appelé ou bien l'identifiant privé qui correspond à l'identifiant public contenu dans le message et dans le second cas déduire de cet identifiant privé le nom de domaine du réseau IMS receveur auprès duquel cet utilisateur appelé est actuellement abonné, puis pour accéder audit module de type DNS pour déterminer l'adresse IP du module de type I-CSCF du réseau IMS dont ledit nom de domaine a été déterminé de manière à lui transmettre ledit message en vue de son traitement.

12. Réseau selon l'une des revendications 1 à 11, **caractérisé en ce que** ledit module de type P-CSCF et/ou ledit module de type I-CSCF et/ou ledit module de type S-CSCF est agencé pour adjoindre à un message reçu à transmettre une information signalant qu'il vient de déterminer un nom de domaine d'un utilisateur appelant ou appelé à partir de son identifiant privé d'utilisateur stocké en correspondance de son identifiant public d'utilisateur.
